# EUROPÄISCHE PATENTSCHRIFT

(11) **EP 1 523 459 B1**
(45) Veröffentlichungstag und Bekanntmachung des Hinweises auf die Patenterteilung: **17.02.2010**
(21) Anmeldenummer: 03740423.3
(22) Anmeldetag: 05.07.2003
(51) Int. Cl.: C04B 35/64, B65D 81/34

(54) **VERDICHTUNG KERAMISCHER WERKSTOFFE MIT HILFE VON ELEKTROMAGNETISCHEN ZENTIMETERWELLEN SOWIE GEFÄSS ZUR DURCHFÜHRUNG DES VERFAHRENS**
CONSOLIDATING OF CERAMIC SUBSTANCES BY MEANS OF ELECTROMAGNETIC CENTIMETRE WAVES, AND RECEPTACLE FOR CARRYING OUT THE INVENTIVE METHOD
DENSIFICATION DE MATERIAUX CERAMIQUES AU MOYEN D'ONDES CENTIMETRIQUES ELECTROMAGNETIQUES ET RECIPIENT PERMETTANT DE METTRE EN OEUVRE CE PROCEDE

(30) Priorität: 19.07.2002 DE 10232818; 20.11.2002 EP 02025674
(43) Veröffentlichungstag der Anmeldung: 20.04.2005
(73) Patentinhaber: Vita Zahnfabrik H. Rauter GmbH & Co. KG, D-79704 Bad Säckingen (DE)
(72) Erfinder: STEPHAN, Marc, 79539 Lörrach (DE); VOLLMANN, Markus, 63571 Geinhausen-Meerholz (DE); THIEL, Norbert, 79713 Bad Säckingen (DE)
(74) Vertreter: von Kreisler Selting Werner
(86) Internationale Anmeldenummer: PCT/EP2003/007212
(87) Internationale Veröffentlichungsnummer: WO 2004/009513

(56) Entgegenhaltungen:
- WO-A-94/19917
- US-A- 5 194 408

## Beschreibung

Gegenstand der vorliegenden Erfindung ist die thermische Verdichtung poröser Keramikteile insbesondere mit kleinem Materialvolumen bis zu 10 cm³. Die thermische Verdichtung erfolgt durch elektromagnetische Strahlung im Wellenlängenbereich von 5 bis 20 cm über dissipative elektrische oder magnetische Polarisationseffekte des Materials. Ferner betrifft die Erfindung ein Gefäß bzw. eine Vorrichtung zur Durchführung des Verfahrens.

Derartige Verfahren werden bisher zur Trocknung, Entbinderung und Sinterung sehr großer keramischer Bauteile im industriellen Produktionsmaßstab angewendet. Die Vorteile dieses Verfahrens liegen im deutlich geringeren Energieverbrauch, der homogeneren Aufheizung (geringer Temperaturgradient) und verringerter Verdichtungszeiten. Dies resultiert in einem wirtschaftlicheren Herstellungsprozess.

Diese Verfahren sind immer noch für Oxidkeramiken wie Al₂O₃ und ZrO₂ problematisch dahingehend, dass bei Raumtemperatur keine wirksame elektromagnetische Dissipation stattfindet. Dieses Hindernis wurde bisher unter Zuhilfenahme einer konventionellen Heizung überbrückt, da die Effektivität der dissipativen Ankopplung der Zentimeterwellen ab einer bestimmten Temperatur drastisch ansteigt. Dies erhöht jedoch wiederum den Zeit- und Energieaufwand so dass die oben aufgeführten Vorteile dieser Technik stark relativiert werden. Eine Umgehung der konventionellen Heizung kann durch Zumischung geeigneter Materialien, die schon bei Raumtemperatur signifikante Polarisationsverluste aufweisen, erreicht werden, oder geeigneter Sinterhilfsmittel. Nachteile dieser Methode liegen in den reduzierten mechanischen Eigenschaften der erkaltenden Keramik im Vergleich zum reinen Material. Insbesondere für den Einsatz in prothetischen Medizinprodukten sind diese aus ästhetischen und Biokompatibilitätsgründen nicht geeignet.

Des Weiteren ist die Wahl des Dämmmaterials zur thermischen Isolierung des Brennraums gegenüber der Umgebung für die großindustrielle Nutzung noch nicht geklärt. Die Schwierigkeit besteht in der geringen thermischen Leitfähigkeit bei gleichzeitig hoher Transparenz für die Zentimeterwellen.

Aus US 5,227,600 ist ein Sinter-Gefäß aus zwei verschiedenen Materialien, nämlich Aluminiumoxid und Zirkoniumoxid bekannt. Die beschriebene Vorrichtung dient zur Herstellung von hochtemperaturbeständigen und mikrowellendurchlässigen Körpern.

Das der Erfindung zu Grunde liegende technische Problem bestand in der Schaffung eines Verfahrens sowie eines Gefäßes zur Durchführung des Verfahrens durch das die Mikrowellenbehandlung auch im nicht großtechnischen Bereich, insbesondere im Bereich der Dentalkeramik, möglich wird.

Das technische Problem wird gelöst durch ein Verfahren zur Herstellung keramischer Teile mit bestimmter Porosität durch Sinterung mittels Mikrowellen, wobei in einem Gefäß zu sinternde Werkstoffe angeordnet sind, dadurch gekennzeichnet dass
- die Mikrowellen Energie zur Sinterung über elektromagnetische Wellen im Bereich der Vakuumwellenlänge von 5 cm - 20 cm im Multimode mit einer elektromagnetischen Leistung bis zu einem Kilowatt in zu sinternde Werkstoffe einbringen, und
- das Gefäß, neben Primärmaterialien zum Aufbau des Gefäßes, aus einem Sekundärmaterial aufgebaut ist, das eine Mischung oder Mischkristalle von nichtmetallischen antiferromagnetischen Materialien mit hochschmelzenden mikrowellentransparenten Materialien aufweist.

Die vorliegende Erfindung löst die obengenannten Probleme durch Nutzung von nichtmetallischen antiferromagnetischen Materialien, die als Tiegelmaterial geeignet sind, welches sich durch dissipative Teilabsorption der elektromagnetischen Zentimeterwellen bei Raumtemperatur, hohen Schmelzpunkt und partieller Zentimeterwellentransparenz auch bei hohen Temperaturen (bis 1800 °C, insbesondere bis ca. 2000 °C) auszeichnet.

Die Benutzung dieses sogenannten Sekundärmaterials in einem Gefäß hat den Vorteil einer kontaminationsfreien Verdichtung des Primärmaterials aus dem das Gefäß ansonsten besteht. Die Auflage des Primärmaterials innerhalb des Gefäßes, wie einen Tiegel, erfolgt z.B. durch hochtemperaturfeste anorganische Fasermaterialien mit geringer Zentimeterwellenabsorption und geringer Wärmeleitfähigkeit. Diese sind im Hochtemperaturofenbau an sich bekannt. Dadurch das dieses Fasermaterial nur als Auflage dient, entfallen die obengenannten Nachteile. Bevorzugte Behältermaterialien sind vor allem nichtmetallische para-, ferromagnetische oder antiferromagnetsiche Materialien wie Chrom-, Eisen-, Nickel- und Manganoxide und daraus abzuleitende Spinell- bzw. Perowskitstrukturen (gebildet mit Metalloxiden ohne signifikante Absorbtion der Zentimeterwellen, z.B. ZnO) oder ferro- oder antiferromagnetische Spinell- wie z.B. Zinkochromit oder ferroelektrische antiferromagnetische Spinell- wie z.B. Zinkochromit oder ferroelektrische Perowskitmateriallen wie z.B. Bariumstrontirumtitanate. Es ist vorteilhaft, dass die Schmelztemperatur dieser Materialien so hoch wie möglich ist. Falls dies nicht der Fall ist, sollte einen hochschmelzendes, nichtmetallisches Material mit hoher Zentimeterwellentransparenz, wie z.B. Zinkoxid, zugemischt werden. Der Vorteil bei dieser Konstruktion des Zentimeterwellenofens ist, dass schon bei Leistungen von 1 Kilowatt bei 2,45 GHz im Multimode die hohe Temperatur von 1800°C erreicht wird. Somit wird dieser Ofen sehr preisgünstig und kleiner als herkömmliche Ofen für diesen Temperaturbereich.

Im erfindungsgemäßen Verfahren werden vorteilhafterweise als Material antiferromagnetische Materialien wie Zinkochromit oder ferroelektrische Materialien wie Bariumstrontiumtitanat eingesetzt.

Die Vorteile bei bestimmten antiferromagnetischen Spinellstrukturen liegen in der hohen Schmelztemperatur und der schon bei Raumtemperatur hohen Verlustleistung von Mikrowellenstrahlung mit der herkömmlichen Frequenz im Bereich von 2 - 3 GHz, insbesondere 2, 3 - 2, 6 GHz und besonders bevorzugt von 2,45 GHz.

In einer Ausführungsform des erfindungsgemäßen Verfahrens liegt der Wellenlängenbereich der elektromagnetischen Wellen zwischen 11 - 13 cm.

Dies ist der in der Konsumelektronik gebräuchlichste Frequenzbereich, so dass hier deutliche Kostenersparnisse vorliegen.

Die keramischen Teile, die erfindungsgemäß erhalten werden, weisen insbesondere eine Porosität von 0-50 Vol.-%, vorzugsweise 10 - 30 Vol.-% auf. Die Porosität ist über die Sintertemperatur steuerbar. Dichtgesinterte keramische Materialien (Porosität nahezu 0 %) haben den Vorteil der hohen Festigkeit gepaart mit hoher Transluzenz.

Erfindungsgemäß können zur Erzeugung der Endfestigkeit der hergestellten Produkte die keramischen Teile mit einem Glas infiltriert werden.

Die porösen Teile können später leicht nachbearbeitet werden und durch geeignete Infiltrationsverfahren auf Basis von anorgansichen Gläsern (z.B. Lanthansilikatgläser) oder organischen Materialien (z.B. UDMA, bis-GMA) verfestigt werden.

Das erfindungsgemäße Verfahren ermöglicht es, dass die keramischen Teile auf eine definierten Enddichte gesintert werden. Das Erreichen hoher Enddichten bei keramischen Materialien wie z.B. Aluminiumoxiden oder Zirkoniumoxiden ist bisher nur mit sehr hohem zeitlichen und teuren konventionellen Erhitzungsverfahren erreichbar.

Insbesondere ist das erfindungsgemäße Verfahren anwendbar zur Herstellung von dentalen Restaurationen.

Zur Einstellung ästhetischer Erfordernisse können dentalkeramische Gerüstteile mit dafür geeigneten Gläsern, wie z.B. Feldspatgläsern, Lithiumdisilikatgläsern oder Fluorapatitgläsern, verblendet werden.

In einer Ausführungsform des erfindungsgemäßen Verfahrens bestehen die zur Herstellung dentalkeramischer Restaurationen verwendeten Materialien aus Al₂O₃, Spinell, Ce- bzw. Y-stabilisiertem ZrO₂ (z.B. TZP, PSZ,) oder aus Mischungen dieser Materialien.

Diese Keramiken zeigen die höchsten Festigkeitswerte und Risszähigkeiten bei keramischen Materialien.

Erfindungsgemäß können vollkeramische, dentale Restaurationen aus dentalen keramischen Massen, wie Feldspatgläsern, Lithiumdisilikatgläsern oder Fluorapatitgläsern hergestellt werden, wobei das erfindungsgemäße Verfahren zur Glasierung von vollkeramischen dentalen Teilen oder z.B. für dentalkeramischen Presskeramiken als Pressofen und Vorwärmofen verwendbar ist.

Die Vorteile liegen hier in der deutlich verkürzten Prozesszeit bei gleichzeitig geringerem Energie- und somit Kostenaufwand.

Zur Erhöhung der Dichtsintertemperatur kann das Material des Gefäßes erfindungsgemäß aus einer Mischung des Materials mit einem hochschmelzenden, nichtmetallischen Material mit hoher Zentimeterwellentransparenz in einem weiten Temperaturbereich bestehen.

Besteht das Sekundärmaterial nur aus einem Stoff, der eine hohe Mikrowellenabsorption bei Raumtemperatur aufweist, so kann die Mikrowellenamplitude so stark abgeschwächt werden, dass das zu sinternde Material nicht mehr genügend aufgeheizt wird.

Insbesondere ist das hochschmelzende, nichtmetallische Material mit hoher Zentimeterwellentransparenz Zinkoxid.

Zinkoxid hat eine hohe Schmelztemperatur von ca. 2000 °C.

Ferner betrifft die Erfindung ein Sinter-Gefäß zur Durchführung des vorstehenden Verfahrens. Erfindungsgemäß weist das Gefäß ein Primär- und ein Sekundärmaterial auf, wobei das Sekundärmaterial eine Mischung oder Mischkristall von nichtmetallischen antiferromagnetischen Materialien mit hochschmelzenden mikrowellentransparenten Materialien aufweist. Auf Grund des Vorsehens eines derartigen Sekundärmaterials in dem Gefäß ist es möglich, bei Raumtemperatur innerhalb kurzer Zeit, insbesondere innerhalb weniger Sekunden, innerhalb des Gefäßes hohe Temperaturen zu erzielen. Hierbei können Temperaturen von ca. 2000°C erzielt werden. Es ist somit möglich, ohne das Vorsehen einer konventionellen Zusatzheizung auch Oxidkeramiken zu sintern. Dies ist mit herkömmlichen Mikrowelleneinrichtungen möglich, die im Bereich von ca. 700 Watt arbeiten und im Multimode-Verfahren betrieben werden.

Besonders bevorzugt ist es, das Gefäß insbesondere aus Materialien, die vorstehend anhand des Verfahrens beschrieben sind, auszugestalten. Vorzugsweise besteht das Sekundärmaterial aus einer Mischung von para-, ferro- bzw, antiferromagnetischem Material, wie z.B. Zinkchromit (ZnCr₂O₄) mit 0 - 99 Gew.-% Zinkit (ZnO).

Vorzugsweise weist das erfindungsgemäße Gefäß einen Aufnahmebereich auf, in den das zu sinternde Material angeordnet wird. Bei dieser besonders bevorzugten Ausführungsform ist der Aufnahmebereich zumindest partiell mit Sekundärmaterial umgeben. Beispielsweise ist der Aufnahmebereich zylindrisch und von einem Kreisring aus Sekundärmaterial umgeben. Vorzugsweise sind mehrere Sekundärmaterialelemente vorgesehen, die den Aufnahmebereich umgeben. Es handelt sich somit um mehrere Elemente, die keinen geschlossenen Ring oder dgl. bilden. Beispielsweise handelt es sich bei den Sekundärmaterialelementen um mehrere Kreisringsegmente. Die Sekundärmaterialelemente können jedoch auch andere Formen aufweisen, z.B. stabförmig ausgebildet sein oder einen mehreckigen, insbesondere rechteckigen Querschnitt haben.

Besonders bevorzugt ist es, wenn das Sekundärmaterial vom Primärmaterial umgeben ist. Hierdurch ist das zur Temperaturerzeugung dienende Sekundärmaterial nahe des Aufnahmebereichs angeordnet, eine direkte Berührung des Sekundärmaterials mit dem zu sinternden Material jedoch vermieden.

Nachfolgend wird die Erfindung anhand bevorzugter Ausführungsformen unter Bezugnahme auf die anliegenden Zeichnungen näher erläutert. Es zeigen:
- Fig. 1: eine schematische Schnitt-Explosionszeichnung einer ersten bevorzugten Ausführungsform des erfindungsgemäßen Gefäßes,
- Fig. 2: eine schematische Schnittansicht der ersten bevorzugten Ausführungsform des Gefäßes,
- Fig. 3: eine schematische Schnittansicht entlang der Linie III-III in Fig. 2,
- Fig.4: eine schematische Schnitt-Explosionsansicht einer zweiten bevorzugten Ausführungsform des erfindungsgemäßen Gefäßes,
- Fig. 5: eine schematische Schnittansicht der zweiten Ausführungsform des erfindungsgemäßen Gefäßes und
- Fig. 6: eine schematische Schnittansicht entlang der Linie VI-VI in Fig. 5.

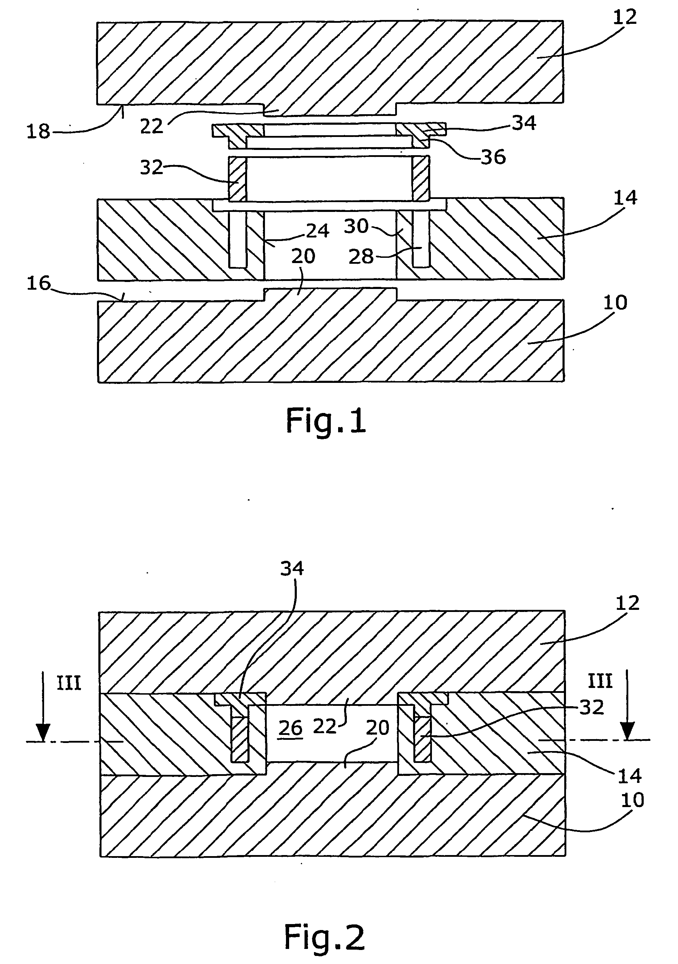

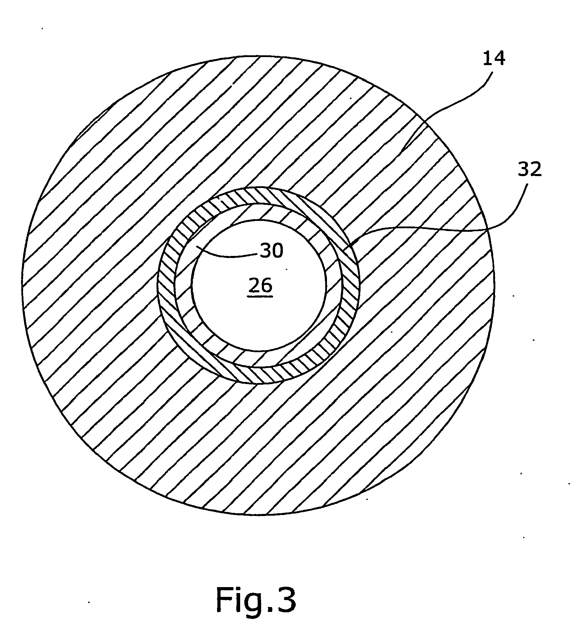

Die erste Ausführungsform (Fign. 1 - 3) des erfindungsgemäßen Gefäßes zur Durchführung des erfindungsgemäßen Verfahrens zur Herstellung keramischer Teile weist ein Bodenelement 10, ein Deckelelement 12 und ein Mittelelement 14 auf. Die Elemente 10, 12, 14 sind vorzugsweise aus Primärmaterial hergestellt. Das Bodenelement 10 und das Deckelelement 12 sind zylindrisch ausgebildet und weisen jeweils einen an der Innenseite 16 bzw. 18 angeordneten zylindrischen Ansatz 20 bzw. 22 auf. Das Mittelteil ist kreisringförmig und weist eine zylindrische Öffnung 24 auf, die in zusammengebautem Zustand (Fig. 2) den Aufnahmebereich 26 ausbildet. Der Durchmesser der zylindrischen Öffnung 24 entspricht den Durchmessern der zylindrischen Ansätze 20 und 22. Hierdurch ist in zusammengebautem Zustand ein zylindrischer, in sich geschlossener Aufnahmebereich 26 ausgebildet.

Zur Aufnahme von Sekundärmaterial ist in dem Mittelteil 14 eine ringförmige Ausnehmung 28 vorgesehen. Die Ausnehmung 28 umgibt den Aufnahmebereich 26, wobei es sich nicht zwangsläufig um eine kreisringförmige Ausnehmung handeln muss. In der bevorzugten, in den Fign. 1 - 3 dargestellten Ausführungsform ist die Ausnehmung 28 kreisringförmig und umgibt den Aufnahmebereich 26 vollständig. Zwischen dem Aufnahmebereich 26 und der kreisringförmigen Ausnehmung 28 ist eine Wand 30 ausgebildet, die wie das gesamte Mittelteil 14 aus Primärmaterial besteht. Das Sekundärmaterial ist somit von Primärmaterial umgeben. In die kreisringförmige Ausnehmung 28 wird entweder ein Sekundärmaterialelement 32 aus Sekundärmaterial eingesetzt oder das Sekundärmaterial 32 in den Kreisring eingefüllt. Die Ausnehmung 28 wird sodann mit einem Verschlusselement 34, das vorzugsweise ebenfalls aus Primärmaterial hergestellt ist, verschlossen. Bei dem Verschlusselement 34 handelt es sich ebenfalls um ein kreisringförmiges Element mit einem kreisringförmigen Ansatz 36, der in die Ausnehmung 28 ragt (Fig. 2).

Das Sekundärmaterialelement 32 und somit das Sekundärmaterial erstreckt sich vorzugsweise über einen Großteil, insbesondere mehr als zwei Drittel der Höhe des Aufnahmebereichs 26. Besonders bevorzugt ist es, wenn sich das Sekundärmaterial über die gesamte Höhe des Aufnahmebereichs erstreckt.

Ferner ist es möglich, in Fig. 2 unter und/ oder oberhalb des Aufnahmebereichs 26 Elemente aus Sekundärmaterial vorzusehen.

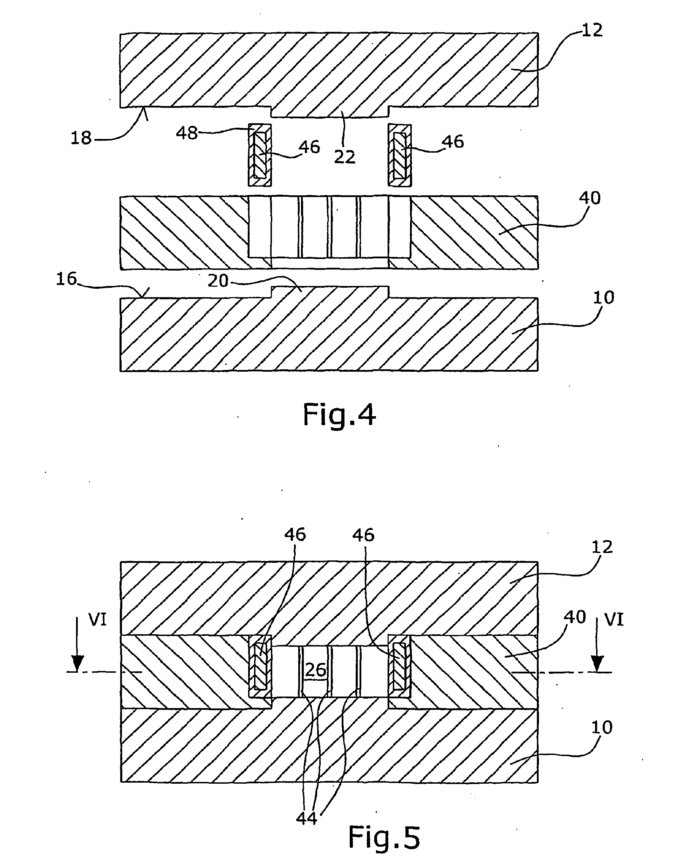

Bei der zweiten bevorzugten Ausführungsform (Fign. 4 - 6) sind mit der ersten Ausführungsform (Fign. 1 - 3) ähnlich oder identische Bestandteile mit denselben Bezugszeichen gekennzeichnet.

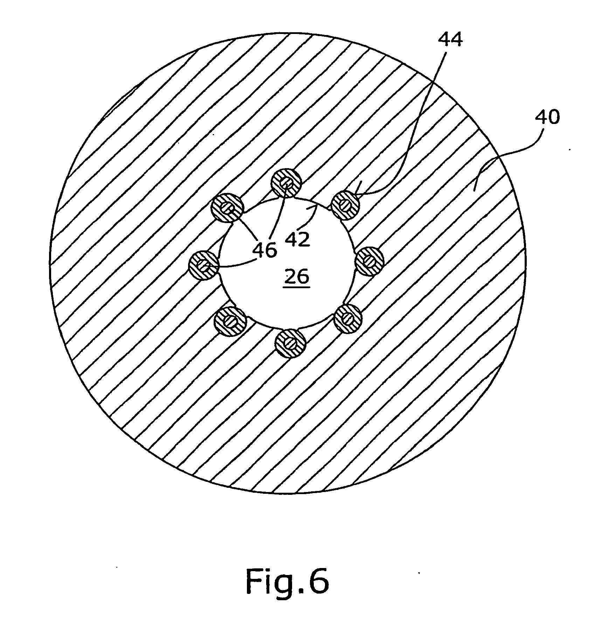

Das Bodenelement 10 sowie das Deckelelement 12 sind im Wesentlichen identisch ausgebildet. Ein Mittelteil 40 weist ebenfalls einen kreisförmigen Querschnitt auf. Durch das Mittelteil 40 ist ein im Wesentlichen zylindrischer Aufnahmebereich 26 ausgebildet. Eine Innenwand 42 (Fig. 6) des Aufnahmebereichs 26 ist jedoch nicht glatt ausgebildet. Vielmehr sind ausgehend von der Innenwand 42 zylindrische Kammern 44 vorgesehen. In die zylindrischen Kammern 44 werden einzelne stabförmige Sekundärmaterialelemente 46 eingeführt. Die Sekundärmaterialelemente 46 sind im dargestellten Ausführungsbeispiel gekapselt ausgebildet. Die Sekundärmaterialelemente 46 sind somit von einer Mantelschicht 48 vollständig umgeben. Die Mantelschicht 48 ist vorzugsweise aus Primärmaterial.

Die Erfindung wird im Folgenden anhand von zwei Beispielen näher erläutert:

Es wurde ein Gefäß aus hochtemperaturfesten Aluminumoxidmaterial (haltbar bis 1800 °C) in der in den Fign. 1 - 3 gezeigten Gefäßform hergestellt. Dieses wurde mit einem Sekundärmaterial 32 in die ringförmige Vertiefung oder Ausnehmung 28 gefüllt. Das Sekundärmaterial besteht aus einer Mischung bzw. Mischkristallen von 50 Gew.-% Zinkochromit (ZnCr₂O₄) und 50 Gew,-% Zinkit (ZnO).

### Beispiel 1:

Das zu sinternde Material besteht aus einem dentalen Kronenmaterial aus yttriumstabilisierten Zirkoniumoxid. Diese Kronenkappe wird in das Gefäß in den Aufnahmebereich 26 auf eine Aluminiumoxidbrennwatte gelegt und zusammen mit dem Gefäß in eine konventionelle Mikrowelle (900 W, Multimode, 2,45 GHz) gestellt. Diese wird 15 Minuten bei einer Leistung von 700 W gefahren. Die Enddichte des so gesinterten Zirkoniumoxidmaterials liegt bei 6,06 g/cm³ und somit bei der theoretischen Dichte dieses Materials.

### Beispiel 2:

Das zu sinternde Material besteht aus einer dentalen dreigliedrigen Brücke mit einer Gesamtlänge von 35mm vor dem Dichtsintern. Diese dreigliedrige Brücke wird in das Gefäß auf eine Aluminiumoxidbrennunterlage gelegt und zusammen mit dem Gefäß in ein konventionelles Mikrowellengerät (s.o.) gestellt. Diese wird für eine halbe Stunde bei 700 W gefahren. Die Enddichte der so gesinterten dreigliedrigen Brücke liegt bei 6,0 g/cm³ und somit bei der theoretischen Dichte dieses Materials.

## Patentansprüche

1. Verfahren zur Herstellung keramischer Teile mit bestimmter Porosität durch Sinterung mittels Mikrowellen, wobei in einem Gefäß zu sinternde Werkstoffe angeordnet sind,
**dadurch gekennzeichnet, dass**
- die Mikrowellen-Energie zur Sinterung über elektromagnetische Wellen im Bereich der Vakuumwellenlänge von 5 cm - 20 cm im Multimode mit einer elektromagnetischen Leistung bis zu einem Kilowatt in zu sinternde Werkstoffe eingebracht wird, und
- das Gefäß neben Primärmateriallen zum Aufbau des Gefäßes aus einem Sekundärmaterial aufgebaut ist, das eine Mischung oder Mischkristall von nichtmetallischen antiferromagnetischen Materialien mit hochschmelzenden mikrowellentransparenten Materialien aufweist.

2. Verfahren nach Anspruch 1, **dadurch gekennzeichnet, dass** der Wellenlängenbereich der elektromagnetischen Wellen zwischen 11 - 13 cm liegt.

3. Verfahren nach Anspruch 1 oder 2, **dadurch gekennzeichnet, dass** die keramischen Teile eine Porosität von 0-50 Vol.-% aufweisen.

4. Verfahren nach Anspruch 3, **dadurch gekennzeichnet, dass** die Porosität zwischen 10 - 30 Vol.-% liegt, wobei die Porosität über den Temperaturverlauf einstellbar ist.

5. Verfahren nach mindestens einem der Ansprüche 1 bis 4, **dadurch gekennzeichnet, dass** zur Erzeugung der Endfestigkeit die keramischen Teile mit einem Glas infiltriert werden.

6. Verfahren nach mindestens einem der Ansprüche 1 bis 5, **dadurch gekennzeichnet, dass** die keramischen Teile auf eine definierten Enddichte von mindestens 80 %, vorzugsweise mindestens 90 % und besonders bevorzugt mindestens 98 % der theoretischen Dichte des jeweiligen Materials gesintert werden.

7. Verfahren nach mindestens einem der Ansprüche 1 bis 6, **dadurch gekennzeichnet, dass** es sich bei den keramischen Teilen um dentale Restaurationen handelt.

8. Verfahren nach mindestens einem der Ansprüche 1 bis 7, **dadurch gekennzeichnet, dass** dentalkeramische Gerüstteile mit dafür geeigneten Gläsern, wie z.B. aus Feldspatgläser, Lithiumdisilikatgläser oder Fluorapatitgläser, verblendet werden.

9. Verfahren nach mindestens einem der Ansprüche 1 bis 8, **dadurch gekennzeichnet, dass** die verwendeten Materialien zur Herstellung dentalkeramischer Restaurationen bevorzugt aus Al₂O₃, Spinell, Ce- bzw. Y-stabilisiertem ZrO₂, (z.B. TZP TetragonalZirconiaPolycrystal, PSZ PartialStabilizedZirconia) oder aus Mischungen dieser Materialien bestehen.

10. Verfahren nach mindestens einem der Ansprüche 1 bis 9 zur Herstellung vollkeramischer, dentaler Restaurationen aus dentalen keramischen Massen, wie Feldspatgläser, Lithiumdisilikatgläser oder Fluorapatitgläser, wobei das Verfahren nach mindestens einem der Ansprüche 1 bis 9 zur Glasierung von vollkeramischen dentalen Teilen oder z.8. für dentalkeramische Presskeramiken als Pressofen und Vorwärmofen verwendet wird.

11. Sinter-Gefäß zur Herstellung keramischer Teile gemäß des Verfahrens nach einem der Ansprüche 1 bis 10 umfassend ein Primärmaterial-Element (10, 12, 14; 40) aus Primärmaterial und Sekundämnaterial-Element (32, 46) aus Sekundärmaterial, wobei das Sekundärmaterial eine Mischung oder Mischkristall von nichtmetallischen antiferromagnetischen Materialien mit hochschmelzenden mikrowellentransparenten Materialien aufweist.

12. Sinter-Gefäß nach Anspruch 11, **dadurch gekennzeichnet, dass** zur Erhöhung der Dichtsintertemperatur das Sekundärmaterial des Gefäßes eine Mischung des Materials mit einem hochschmelzenden, nichtmetallischen Material mit hoher Zentimeterwellentransparenz in einem weiten Temperaturbereich aufweist.

13. Sinter-Gefäß nach Anspruch 12, **dadurch gekennzeichnet, dass** das hochschmelzende, nichtmetallische Sekundärmaterial mit hoher Zentimeterwellentransparenz Zinkoxid (ZnO) ist.

14. Sinter-Gefäß nach mindestens einem der Ansprüche 11 bis 13, **gekennzeichnet durch** einen Aufnahmebereich (26) zur Aufnahme des zu sinternden Materials, wobei um den Aufnahmebereich (26) zumindest partiell Sekundärmaterial vorgesehen ist.

15. Sinter-Gefäß nach Anspruch 14, **dadurch gekennzeichnet, dass** der Aufnahmebereich (26) von mindestens einem, vorzugsweise mehreren Sekundärmaterialelementen (32, 46) umgeben ist.

16. Sinter-Gefäß nach einem der Ansprüche 11 bis 15, **dadurch gekennzeichnet, dass** das Sekundärmaterial von Primärmaterial umgeben ist.

17. Sinter-Gefäß nach einem der Ansprüche 11 bis 16, **dadurch gekennzeichnet, dass** sich das Sekundärmaterial über die gesamte Höhe des Aufnahmebereichs (26) erstreckt.

18. Sinter-Gefäß nach einem der Ansprüche 14 bis 17, **dadurch gekennzeichnet, dass** die Sekundärmaterialelemente (46) stabförmig sind.

19. Sinter-Gefäß nach einem der Ansprüche 14 bis 18, **dadurch gekennzeichnet, dass** die Sekundärmaterialelemente (46) regelmäßig um den Aufnahmebereich (26) verteilt angeordnet sind.

20. Sinter-Gefäß nach einem der Ansprüche 14 bis 19, **dadurch gekennzeichnet, dass** die Sekundärmaterialelemente (46) insbesondere mit Primärmaterial gekapselt sind.

## Claims

1. Method for manufacturing ceramic parts with a defined porosity by sintering using microwaves, wherein materials to be sintered are arranged in a vessel,
**characterized in that**
- the microwave energy for sintering is introduced into materials to be sintered via electromagnetic waves in the range of the vacuum wavelength of 5 cm to 20 cm in a multi-mode with an electromagnetic power of up to one kilowatt, and
- besides being formed from primary materials for forming the vessel, the vessel is formed from a secondary material that comprises a mixture or a mixed crystal of non-metallic anti-ferromagnetic materials and refractory microwave-transparent materials.

2. Method according to claim 1, **characterized in that** the wavelength range of the electromagnetic waves is between 11 - 13 cm.

3. Method according to claim 1 or 2, **characterized in that** the ceramic parts have a porosity of 0-50 percent by volume.

4. Method according to claim 3, **characterized in that** the porosity is between 10 - 30 percent by volume, the porosity being adjustable by the temperature profile.

5. Method according to at least one of claims 1 to 4, **characterized in that** the ceramic parts are infiltrated with glass to obtain the final strength.

6. Method according to at least one of claims 1 to 5, **characterized in that** the ceramic parts are sintered to a defined final density of at least 80%, preferably at least 90 %, and particularly preferred at least 98 % of the theoretical density of the respective material.

7. Method according to at least one of claims 1 to 6, **characterized in that** the ceramic parts are dental restorations.

8. Method according to at least one of claims 1 to 7, **characterized in that** dental ceramic frame parts are blinded with appropriate glass materials, such as feldspar glass, lithium disilicate glass or fluoroapatite glass.

9. Method according to at least one of claims 1 to 8, **characterized in that** the materials used to manufacture dental ceramic restorations are preferably composed of Al₂O₃, spinel, Ce- or Y-stabilized ZrO₂ (e.g. TZP tetragonal zirconia polycrystal, PSZ partial stabilized zirconia) or of mixtures of these materials.

10. Method according to at least one of claims 1 to 9 for manufacturing full-ceramic dental restorations from dental ceramic masses such as feldspar glass, lithium disilicate glass or fluoroapatite glass, the method of at least one of claims 1 to 9 being used to vitrify full-ceramic dental parts or, for instance, for dental ceramic press ceramics as a press furnace and a preheating oven.

11. Sintering vessel for manufacturing ceramic parts according to the method of one of claims 1 to 10, comprising a primary material element (10, 12, 14; 40) of a primary material and a secondary material element (32, 46) of a secondary material, said secondary material comprising a mixture or a mixed crystal of non-metallic anti-ferromagnetic materials and of refractory microwave-transparent materials.

12. Sintering vessel of claim 11, **characterized in that**, for an increase in the densification sintering temperature, the secondary material of the vessel comprises a mixture of the material and of a refractory non-metallic material with a high transparency to centimetre waves in a wide temperature range.

13. Sintering vessel of claim 12, **characterized in that** the refractory non-metallic secondary material with high transparency to centimetre waves is zinc oxide (ZnO).

14. Sintering vessel of at least one of claims 11 to 13, **characterized by** a receiving portion (26) for receiving the material to be sintered, wherein secondary material is provided at least partly around the receiving portion (26).

15. Sintering vessel of claim 14, **characterized in that** the receiving portion (26) is surrounded by at least one, preferably a plurality of secondary material elements (32, 46).

16. Sintering vessel of one of claims 11 to 15, **characterized in that** the secondary material is surrounded by primary material.

17. Sintering vessel of one of claims 11 to 16, **characterized in that** the secondary material extends over the entire height of the receiving portion (26).

18. Sintering vessel of one of claims 14 to 17, **characterized in that** the secondary material elements (46) are rod-shaped.

19. Sintering vessel of one of claims 14 to 18, **characterized in that** the secondary material elements (46) are distributed regularly around the receiving portion (26).

20. Sintering vessel of one of claims 14 to 19, **characterized in that** the secondary material elements (46) are encapsulated in particular in primary material.

## Revendications

1. Procédé de production d'éléments céramiques avec une porosité définie par vitrification au moyen de micro-ondes, les matériels à vitrifier étant prévus dans un récipient,
**caractérisé en ce que**
- l'énergie des micro-ondes pour la vitrification au moyen d'ondes électromagnétiques est introduite dans des matériels à vitrifier en multi-mode dans le domaine de la longueur d'onde de vacuum de 5 cm - 20 cm avec une puissance électromagnétique jusqu'à un kilowatt, et
- le récipient est constitué, outre des matériels primaires pour former le récipient, d'un matériel secondaire comprenant un mélange ou un cristal mixte de matériels non-métalliques anti-ferromagnétiques et de matériels de fusion élevée transparents aux micro-ondes.

2. Procédé selon la revendication 1, **caractérisé en ce que** le domaine de longueur d'onde des ondes électromagnétiques est situé entre 11 - 13 cm.

3. Procédé selon la revendication 1 ou 2, **caractérisé en ce que** les éléments céramiques présentent une porosité de 0 - 50 % par volume.

4. Procédé selon la revendication 3, **caractérisé en ce que** la porosité est située entre 10 - 30 % par volume, la porosité étant ajustable au moyen du cours de la température.

5. Procédé selon au moins l'une des revendications 1 à 4, **caractérisé en ce que** les éléments céramiques sont infiltrés par un matériel de verre pour obtenir la rigidité finale.

6. Procédé selon au moins l'une des revendications 1 à 5, **caractérisé en ce que** les éléments céramiques sont vitrifiés à une densité finale définie d'au moins 80%, de préférence au moins 90% et, particulièrement préféré, au moins 98% de la densité théorique du matériel respectif.

7. Procédé selon au moins l'une des revendications 1 à 6, **caractérisé en ce que** les éléments céramiques sont des restaurations dentaires.

8. Procédé selon au moins l'une des revendications 1 à 7, **caractérisé en ce que** des éléments de cadre en céramique dentaire sont revêtues avec des matériels de verre appropriés, pour exemple verres de feldspath, verres de disilicate de lithium ou verres de fluoroapatite.

9. Procédé selon au moins l'une des revendications 1 à 8, **caractérisé en ce que** les matériels pour la production de restaurations dentaires en céramique de préférence consistent en Al₂O₃, spinelle, ZrO₂ stabilisé par Ce ou Y (p. ex. TZP polycristal tetragonal de Zirconium, PSZ Zirconium partiellement stabilisé) ou en des mélanges de ces matériels.

10. Procédé selon au moins l'une des revendications 1 à 9 pour la production de restaurations dentaires complètement en céramique à partir de masses dentaires céramiques comme des verres de feldspath, des verres de disilicate de lithium et des verres de fluorapatite, le procédé selon au moins l'une des revendications 1 à 9 étant utilisé pour la vitrification d'éléments dentaires complètement en céramique ou, pour exemple, comme four de pressée et four de préchauffage pour des céramiques dentaires pressées.

11. Récipient de vitrification pour la production d'éléments céramiques selon le procédé selon l'une quelconque des revendications 1 à 10, comprenant un élément de matériel primaire (10, 12, 14; 40) en un matériel primaire et un élément de matériel secondaire (32, 46) en u matériel secondaire, ledit matériel secondaire comprenant un mélange ou un cristal mixte des matériels non-métalliques anti-ferromagnétiques et des matériels de fusion élevée transparents aux micro-ondes.

12. Récipient de vitrification selon la revendication 11, **caractérisé en ce que**, pour l'augmentation de la température de vitrification à densité maximale, le matériel secondaire du récipient comprend un mélange de ce matériel et d'un matériel à fusion élevée non-métallique ayant une transparence aux ondes centimétriques dans une grande gamme de température.

13. Récipient de vitrification selon la revendication 12, **caractérisé en ce que** le matériel secondaire à fusion élevée non-métallique ayant une transparence élevée aux ondes centimétriques est l'oxyde de zinc (ZnO).

14. Récipient de vitrification selon au moins l'une des revendications 11 à 13, **caractérisé par** une zone de réception (26) pour recevoir le matériel à vitrifier, la zone de réception (26) étant au moins partiellement entourée par matériel secondaire.

15. Récipient de vitrification selon la revendication 14, **caractérisé en ce que** la zone de réception (26) est entourée par au moins un, de préférence plusieurs éléments de matière secondaire (32, 46).

16. Récipient de vitrification selon l'une quelconque des revendications 11 à 15, **caractérisé en ce que** le matériel secondaire est entouré par matériel primaire.

17. Récipient de vitrification selon l'une quelconque des revendications 11 à 16, **caractérisé en ce que** le matériel secondaire s'étend sur toute la hauteur de la zone de réception (26).

18. Récipient de vitrification selon l'une quelconque des revendications 14 à 17, **caractérisé en ce que** les éléments de matériel secondaire (46) présentent une forme de bâton.

19. Récipient de vitrification selon l'une quelconque des revendications 14 à 18, **caractérisé en ce que** les éléments de matériel secondaire (46) sont repartis régulièrement autour de la zone de réception (26).

20. Récipient de vitrification selon l'une quelconque des revendications 14 à 19, **caractérisé en ce que** les éléments de matière secondaire (46) sont capsulés notamment en matière primaire.
